# EUROPEAN PATENT APPLICATION

(11) **EP 1 666 299 A2**
(43) Date of publication of application: **07.06.2006**
(21) Application number: 05109917.4
(22) Date of filing: 24.10.2005
(51) Int. Cl.: B60K 17/346

(54) **Transfer case with variably controlled torque coupling device**

(30) Priority: 15.11.2004 US 986793
(71) Applicant: DANA CORPORATION, Toledo, OH 43615 (US)
(72) Inventor: Krisher, James, 46845, FORT WAYNE (US); Redding, Thomas, 46783, ROANOKE (US); Heisey, Zachary M., 43537, MAUMEE (US)
(74) Representative: Franzolin, Luigi

(57) **Abstract**

A transfer case including a hydraulically actuated torque-coupling device is provided for selectively actuating a secondary drive axle of an All-Wheel Drive motor vehicle when wheel slippage occurs with a primary axle. The transfer case comprises a housing, an input shaft and an output shaft both rotatably supported within the housing, and the torque-coupling device. The torque-coupling device comprises a hollow casing, a selectively engageable friction clutch assembly for operatively coupling the input shaft to the output shaft, and a hydraulic clutch actuator. The hydraulic actuator includes a hydraulic pump located within the casing and adapted to generate a hydraulic pressure to frictionally load the friction clutch assembly, and a variable pressure relief valve assembly fluidly communicating with the hydraulic pump to selectively control the hydraulic pressure generated by the pump.

## Description

### BACKGROUND OF THE INVENTION

### 1. Field of the Invention

The present invention relates to transfer cases for motor vehicles, and more particularly to a transfer case including torque-coupling device having an electronically controlled hydraulic actuator including an electro-magnetically actuated variable pressure relief valve for selectively activating a secondary drive axle of the motor vehicle.

### 2. Description of the Prior Art

Many modem vehicles employ four-wheel drive systems. These systems have been marketed in two forms. Systems generally termed four-wheel drive (4WD) have a transfer case, which is controlled by the operator to select two wheel or four-wheel drive. If the operator selects the four-wheel drive condition, the vehicle drives all four wheels continuously. Some of these systems have employed overrunning clutches at two of the wheel to alleviate some of the disadvantages of 4WD which result from tire pressure differential and cornering to name a few.

All wheel drive (AWD) systems also provide the benefits of a four-wheel drive vehicle and do not require the operator to intentionally select this condition. These systems often employ a viscous clutch in the transfer case to transfer torque to the drive wheels that are not sensed as slipping. In tight cornering situations and during towing, these AWD systems present a disadvantage. In cornering situations, noise and vibration can result from the AWD system being engaged. While this is not detrimental to the powertrain during short durations, it can be disconcerting to the operator.

Hydraulic couplings are used in various vehicular drivetrain applications to limit slip and transfer drive torque between a pair of rotary members. In all-wheel drive applications, hydraulic couplings are used to automatically control the drive torque transferred from a driven member to a non-driven member in response to speed differentiation therebetween. In limited slip applications, couplings are used in association with a differential to automatically limit slip and bias the torque distribution between a pair of rotary members.

Such hydraulic couplings conventionally use a frictional clutch between the rotary members. The frictional clutch may be selectively actuated by various hydraulic actuator assemblies, which are constructed of elements disposed inside the differential casing. The hydraulic actuator assemblies internal to the differential case often include displacement pumps disposed inside the differential casing and actuated in response to a relative rotation between the differential case and the output shaft. The displacement pumps are usually in the form of internal gear pumps, such as gerotor pumps adapted to convert rotational work to hydraulic work. In the internal gear pumps, an inner gear having outwardly directed teeth cooperates with an external gear having inwardly directed teeth so that fluid chambers therebetween increase and decrease in volume as the inner and outer gears rotate in a housing. By connecting the inlet and outlet of the device to the proper location along the sides of the gear set, the variable displacement chambers receive and discharge hydraulic fluid so that the device can function as a pump or motor. A shaft or other mechanical device can be connected to either the inner or outer gear depending upon the type of device. The hydraulic actuator assemblies further include a hydraulic piston member for frictionally loading the friction clutch.

While known hydraulic couplings, including but not limited to those discussed above, have proven to be acceptable for various vehicular driveline applications, such devices are nevertheless susceptible to improvements that may enhance their performance and cost. With this in mind, a need exists to develop improved hydraulic couplings and driveline apparatuses that advance the art.

Moreover, there is a problem with the current hydraulic coupling in that they do not have a simple on/off capability, which is separate and distinct from the hydraulic pressure supply/control circuit actuating the clutch assemblies. Therefore, it is the intent of this invention to overcome these shortcomings by providing an external control of the hydraulic pressure generated within a hydraulically actuated limited slip coupling in which the limited slip clutch can either be turned on or off, or set at any intermediate condition by controlling the maximum system hydraulic pressure limit.

### SUMMARY OF THE INVENTION

The present invention provides an improved transfer case for a drivetrain of an all-wheel drive (AWD) or four-wheel drive (4WD) motor vehicle including an internal combustion engine coupled through a transmission to a transfer case distributing engine torque between a primary full-time drive axle assembly, and a selectively operable secondary, on-demand drive axle assembly. The transfer case of the present invention comprises an input shaft and an input member mounted about the input shaft, an output shaft spaced from the input shaft and an output member mounted about the output shaft, a mechanism for transmitting torque from the input member to the output member, and a torque-coupling device for selectively drivingly connecting the input shaft to the input member or the output member to the output shaft. The output shaft is drivingly connected to the secondary drive axle.

The torque coupling device provides an infinitely variable torque distribution between the primary and secondary axle assemblies of the AWD motor vehicle. The torque coupling device in accordance with the present invention includes a hollow casing, a friction clutch assembly and a hydraulic clutch actuator for selectively frictionally loading the friction clutch assembly. The friction clutch assembly includes at least one first member coupled to rotate with the input member or the output member, and at least one second member coupled to rotate with the input shaft or the output shaft. The hydraulic clutch actuator in turn comprises a hydraulic pump disposed within the hollow casing to generate a hydraulic pressure to frictionally load the friction clutch assembly, and a variable pressure relief valve assembly fluidly communicating with the hydraulic pump to selectively control the hydraulic pressure.

Therefore, the selectively operable transfer case for the AWD motor vehicles in accordance with the present invention represents a novel arrangement of the transfer case including a hydraulically actuated torque-coupling device provided a variable pressure relief valve for allowing selective actuation of the secondary drive axle and infinitely variable torque distribution between the primary and secondary drive axles of the AWD motor vehicle.

### BRIEF DESCRIPTION OF THE DRAWINGS

Other objects and advantages of the invention will become apparent from a study of the following specification when viewed in light of the accompanying drawings, wherein:
Fig. 1 is a schematic diagram showing a drivetrain of an all-wheel drive motor vehicle in accordance with a first exemplary embodiment of the present invention;
Fig. 2 is a side view of a transfer case in accordance with the first exemplary embodiment of the present invention;
Fig. 3 is a front view of the transfer case in accordance with the first exemplary embodiment of the present invention;
Fig. 4 is a sectional view of the transfer case in accordance with the first exemplary embodiment of the present invention taken along lines IV-IV in Fig. 3;
Fig. 5 is a partial sectional view of the transfer case in accordance with the first exemplary embodiment of the present invention of Fig. 4 showing an enlarged sectional view of a hydraulically actuated torque-coupling device in accordance with the preferred embodiment of the present invention;
Fig. 6 is an enlarged partial sectional view of a variable pressure relief valve assembly shown in a circle 'A' in Fig. 5;
Fig. 7 is a graph showing an axial force applied upon a valve closure member by an electro-magnetic actuator as a function of "off-set" between a coil housing and an armature;
Fig. 8 is a side view of a transfer case in accordance with a second exemplary embodiment of the present invention;
Fig. 9 is a front view of the transfer case in accordance with the second exemplary embodiment of the present invention;
Fig. 10 is a sectional view of the transfer case in accordance with the second exemplary embodiment of the present invention taken along lines X-X in Fig. 9;
Fig. 11 is a partial sectional view of the transfer case in accordance with the second exemplary embodiment of the present invention of Fig. 10 showing an enlarged sectional view of the hydraulically actuated torque-coupling device in accordance with the preferred embodiment of the present invention.

### DETAILED DESCRIPTION OF PREFERRED EMBODIMENTS

The preferred embodiments of the present invention will now be described with the reference to accompanying drawings.

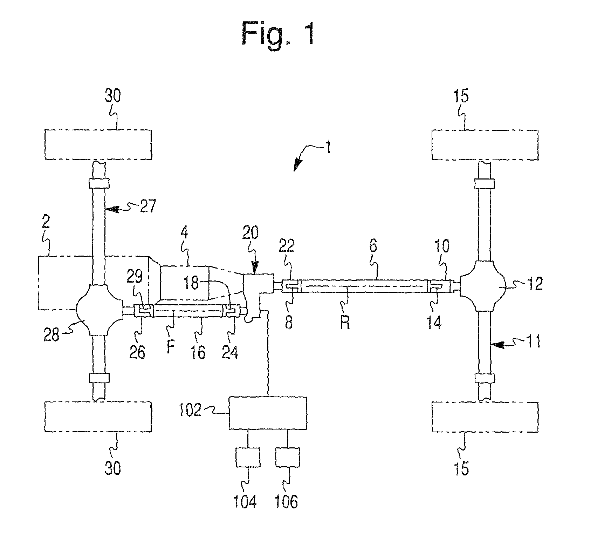

Fig. 1 schematically depicts a drivetrain 1 of an all-wheel drive (AWD) or four-wheel drive (4WD) motor vehicle in accordance with the present invention. The AWD drivetrain 1 comprises an internal combustion engine 2 (shown in phantom line) mounted to a front end of the motor vehicle and coupled to a transmission unit 4 (also shown in phantom line).

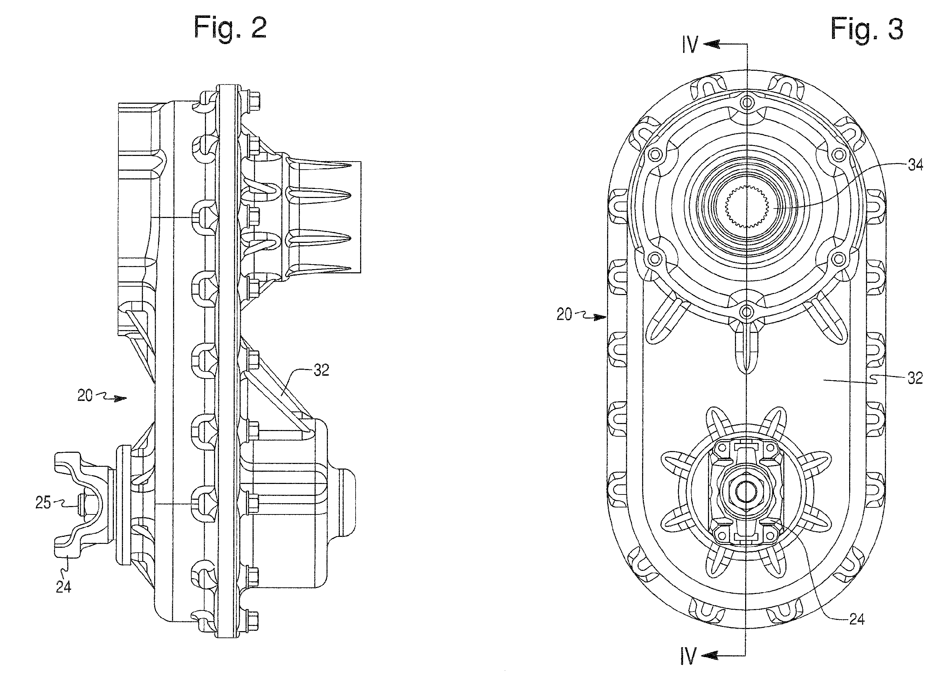

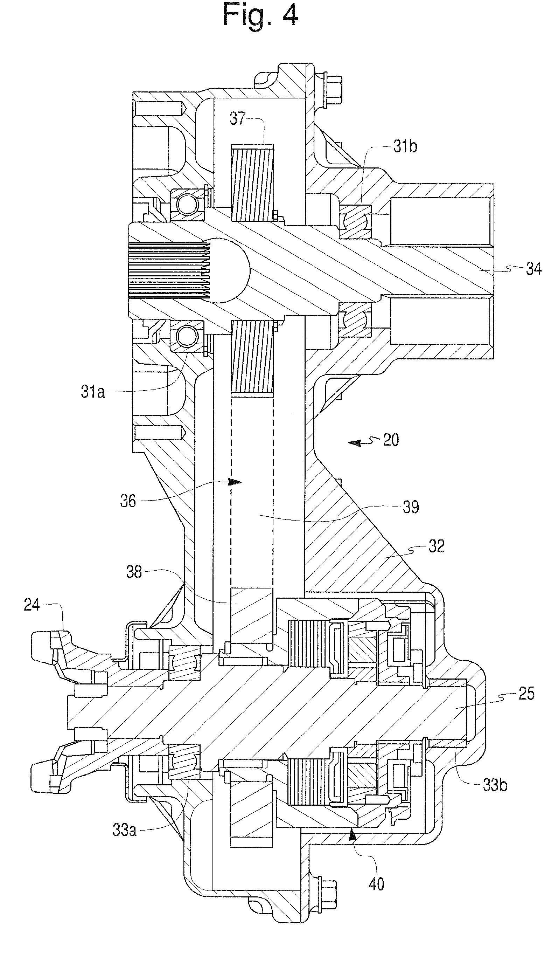

According to the first exemplary embodiment of the present invention, a transfer case 20 is secured to the rear of the transmission unit 4. The transmission unit 4 is provided with an output shaft that is coupled to an input shaft (referred to below in Figs. 3 and 4 as 34) of the transfer case 20. The transfer case 20 includes a rear output shaft or yoke 22 connected to a forward end of a rear drive shaft 6 by means of a conventional universal joint coupling 8. The rearward end of the rear drive shaft 6 is coupled to an input shaft or yoke 10 of a rear differential 12 of a rear (primary) full-time axle assembly 11, by means of a universal joint coupling 14. The rear differential 12 is adapted to provide torque from the rear drive shaft 6 between rear wheels 15 (shown in phantom lines).

The transfer case 20 is further provided with a front output yoke 24 that is coupled to a front output shaft (referred to below in Figs. 2 and 4 as 25) of the transfer case 20 and connected to the rearward end of a front drive shaft 16 by means of a universal joint coupling 18. The front drive shaft 16 has a forward end connected to an input shaft or yoke 26 of a front differential unit 28 of a front (secondary) on-demand axle assembly 27 by means of a universal joint coupling 29 and is adapted to divide torque received from the drive shaft 16 between the vehicle front wheels 30 (shown in phantom lines). When configured as described, the rear drive shaft 6 is adapted to rotate about an axis R, while the front drive shaft 16 is adapted to rotate about an axis F.

The transfer case 20 is provided for dividing the drive torque originating from the transmission unit 4 between the rear and front propeller shafts 6 and 16, respectively. In one case, referred to as "four-wheel drive," drive torque is provided to both shafts. In another case, referred to as "two-wheel drive," drive torque is provided only to one drive shaft. Usually, this is the rear propeller shaft 6. The transfer case 20 of the present invention is provided to selectively actuate the front, secondary drive axle assembly 27 of the AWD motor vehicle.

As illustrated in Figs. 2-4, the transfer case 20 comprises a hollow housing 32 secured to the transmission unit 4 (shown in Fig. 1), an input shaft 34 drivingly coupled to the output shaft of the transmission unit 4, a front output shaft 25 drivingly coupled to the secondary axle assembly 27 and selectively drivingly connectable to the input shaft 34. The hollow housing 32 generally comprises more than one section, the sections being held together by conventional fastening means, such as bolts. The input shaft 34 and the front output shaft 25 are rotatably supported within the housing 32 by appropriate support means, such as antifriction rolling bearing assemblies or the like and the openings through which the shafts 25 and 34 enter or exit the housing 32 will be provided with appropriate seal assemblies, as are well known in the prior art.

Preferably, the input shaft 34 is rotatably supported within the housing 32 through anti-friction bearings 31a and 31b. The front output shaft 25 is rotatably supported within the housing 32 through anti-friction bearing 33a and 33b. Likewise, all connections between the shafts 25, 34 and component parts will be achieved through appropriate means, such as spline connections.

Torque transfer from the input shaft 34 to the front output shaft 25 occurs through a drive assembly 36. Preferably, the drive assembly 36 is in the form of a chain drive assembly. Alternatively, gear drive assembly for transferring torque between the input shaft 34 and the front output shaft 25 may be employed. The chain drive assembly 36 includes an input sprocket 37 mounted about the input shaft 34, an output sprocket 38 mounted about the front output shaft 25, and an endless element 39 is provided to transmit a drive torque from the input sprocket 37 to the output sprocket 38. Preferably, the endless element 39 is a chain. It will be appreciated that any other types of the endless torque-transmitting elements known in the prior art, such as a toothed belt, flat belt, V-belt, etc., may be employed. The input sprocket 37 is drivingly connected to the input shaft 34 by any known means, such as through a spline connection.

The output sprocket 38 is mounted about the front output shaft 25 through a selectively operable, hydraulically actuated torque-coupling device 40 adapted to operatively and selectively actuate the front, secondary drive axle assembly 27 of the drivetrain 1 of the AWD motor vehicle only when needed, e.g. when slippage of the wheels 15 of the primary axle assembly 11 occurs. Specifically, the torque-coupling device 40 operatively and selectively connects the input shaft 34 and the front output shaft 25. More specifically, the torque-coupling device 40 of the transfer case 20 according to the first exemplary embodiment of the present invention, is provided for selectively coupling the output sprocket 38 with he front output shaft 25.

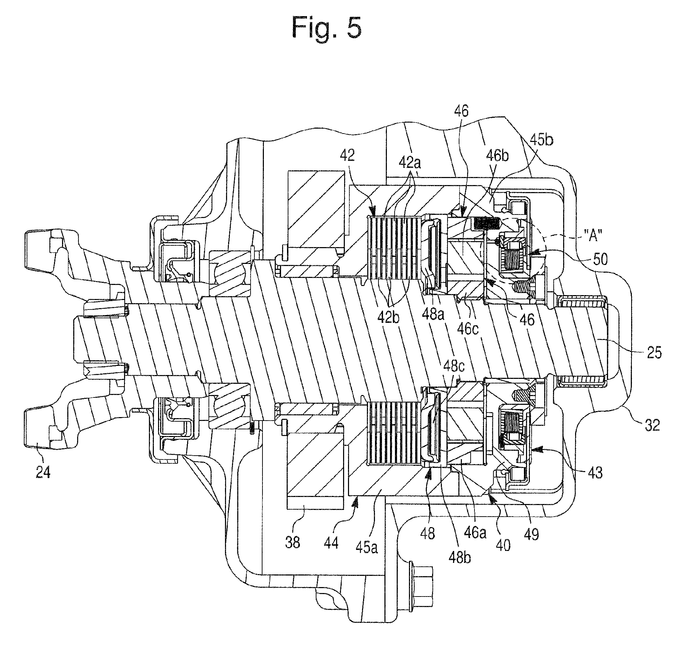

As illustrated in detail in Fig. 5, the torque-coupling device 40 comprises a friction clutch assembly 42 and a hydraulic clutch actuator 43 for selectively frictionally loading (actuating) the friction clutch assembly 42. The friction clutch assembly 42 is provided for engaging and disengaging the output sprocket 38, in turn positively coupled to the input shaft 34, and the front output shaft 25. The hydraulically actuated friction clutch assembly 42 and the hydraulic clutch actuator 43 are disposed within a hollow casing 44 rotatably mounted within the housing 32 and drivingly coupled to the output sprocket 38. Preferably, the casing 44 is formed of two halves 45a and 45b secured to each other by any appropriate manner known in the art, such as by threaded fasteners.

The friction clutch assembly 42, well known in the prior art, includes sets of alternating outer friction plates 42a and inner friction plates 42b. Conventionally, an outer circumference of the outer friction plates 42a is provided with projections that non-rotatably engages corresponding grooves formed in the casing 44. Similarly, an inner circumference of the inner friction plates 42b is provided with projections that non-rotatably engage corresponding grooves formed in the front output shaft 25. At the same time, both the outer friction plates 42a and the inner friction plates 42b are slideable in the axial direction. The clutch plates 42a are adapted to frictionally engage the clutch plates 42b to form a torque coupling arrangement between the casing 44 and the front output shaft 25.

Furthermore, the hydraulic clutch actuator 43 selectively actuates the clutch assembly 42. Preferably, the hydraulic clutch actuator 43 includes a speed sensitive positive displacement hydraulic pump 46 providing a pressurized hydraulic fluid, a piston assembly 48 for axially loading the friction clutch assembly 42, and a variable pressure relief valve assembly 50 for selectively controlling a discharge pressure of the pump 46 and, subsequently, the friction clutch assembly 42.

The variable pressure relief valve assembly 50 is operated by an electro-magnetic (preferably, solenoid) actuator electronically controlled by a coupling control module (CCM) 102 (shown in Fig. 1) based on one or more vehicle parameters as control inputs 104, such as a vehicle speed, a wheel speed difference, vehicle yaw rate, a vehicle lateral acceleration, a steering angle, an engine throttle position, a brake application, an ice detection, a moisture detection, a vehicle driveline configuration, a vehicle yaw stability control system and an anti-lock brake system/traction control system (ABS/TCS). The CCM 102 is also connected to a source of an electric power supply, such as an electric storage battery 106 mounted on the motor vehicle. When energized, the variable pressure relief valve assembly 50 is capable of continuously modulating a discharge pressure of the pump 46 in a variable range from a minimum pressure to a maximum pressure, thereby selectively and variably controlling a drive torque applied from the input shaft 34 to the front output shaft 25 in a range from a minimum torque value to a maximum torque value.

The speed sensitive hydraulic displacement pump 46 disposed within the casing 44 actuates the clutch assembly 42 when the relative rotation between the input shaft 34 and the front output shaft 25 occurs. It will be appreciated that a hydraulic pressure generated by the pump 46 is substantially proportional to a rotational speed difference between the input shaft 34 and the front output shaft 25. Preferably, the hydraulic displacement pump 46 employed to provide pressurized hydraulic fluid to actuate the clutch assembly 42 is a bi-directional gerotor pump. The gerotor pump 46 includes an outer ring member 46a, an outer rotor 46b, and an inner rotor 46c. The inner rotor 46c drivingly coupled (i.e., keyed or splined) to the front output shaft 25. The inner rotor 46c has a plurality of external teeth that rotate concentrically relative to the front output shaft 25. The outer rotor 46b includes a plurality of internal teeth and has an outer circumferential edge surface that is rotatably supported within a circular internal bore formed in the outer ring member 46a. Preferably, the inner rotor 46c has one less tooth than the outer rotor 46b and when relative rotation between the inner rotor 46c and the outer ring member 46a occurs, it causes eccentric rotation of the outer rotor 46b, which can freely rotate within the outer ring member 46a eccentrically with respect to the inner rotor 46c, thus providing a series of decreasing and increasing volume fluid pockets by means of which fluid pressure is created. Therefore, when relative motion takes place between the front output shaft 25 and the input shaft 34, the inner rotor 46c of the gerotor pump 46 generates hydraulic fluid pressure. However, it will be appreciated that any other appropriate type of hydraulic pump generating the hydraulic pressure in response to the relative rotation between the front output shaft 25 and the input shaft 34 is within the scope of the present invention.

The piston assembly 48 including a hydraulically actuated piston 48a disposed within a piston housing 48b, serves to compress the clutch assembly 42 and retard any speed differential between the front output shaft 25 and the input shaft 34. Pressurized hydraulic fluid to actuate the piston 48a and engage the clutch assembly 42 is provided by the gerotor pump 46. In such an arrangement, when a speed difference between the front output shaft 25 and the input shaft 34 exists, the hydraulic fluid is drawn into the pump 46 through a suction passage 49. The gerotor pump 46 pumps the pressurized fluid into a piston pressure chamber 48c defined between the piston 48a and the piston housing 48b to actuate the clutch assembly 42. As the speed difference increases, the pressure increases. The pressurized fluid in the piston pressure chamber 48a creates an axial force upon the piston 28a for applying a compressive clutch engagement force on the clutch assembly 42, thereby transferring drive torque from the input shaft 34 to the front output shaft 25 through the casing 44. The amount of torque transfer (i.e., the torque ratio or split) is progressive and continuously variable and is proportional to the magnitude of the clutch engagement force exerted by the piston 48a on the clutch assembly 42 which, in turn, is a function of the fluid pressure within the piston chamber 48a. Moreover, the magnitude of the fluid pressure within piston pressure chamber 48a, as delivered thereto by the hydraulic pump 46, is largely a function of the speed differential between the front output shaft 25 and the input shaft 34.

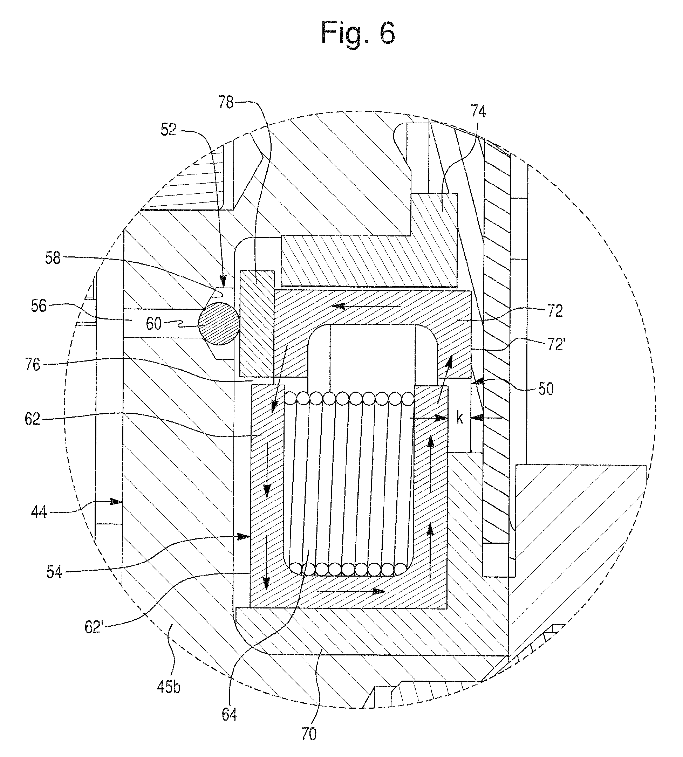

As noted above, in order to control the fluid pressure within the piston pressure chamber 48a and, subsequently, the output torque distribution by the torque-coupling device 40 between the primary and auxiliary drive axle assemblies 11 and 27 respectively, the hydraulic clutch actuator 43 is provided with the variable pressure relief valve assembly 50. As illustrated in detail in Fig. 6, the variable pressure relief valve assembly 50 according to the present invention is in the form of an electro-magnetic valve assembly mounted to the casing 44 and comprises a pressure relief check valve 52 controlled by an electro-magnetic actuator 54 that may be any appropriate electro-magnetic device well known in the art, such as a solenoid.

The check valve 52 comprises a fluid relief passageway 56 that is in fluid communication with the piston pressure chamber 48c, a substantially conical valve seat 58 that is in open communication with the passageway 56, and a spherical valve closure member 60 adapted to seat in the valve seat 58 for sealing the fluid relief passageway 56. It will be appreciated that the valve closure member 60 may be in any appropriate form other than spherical, such as conical. The valve seat 58 is formed in an outer side surface of the half member 45b of the casing 44. The valve closure member 60 is movable between a closed position when the valve closure member 60 engages the valve seat 58 (as shown in Fig. 6), and an open position when the valve closure member 60 is axially spaced from the valve seat 58.

The electro-magnetic actuator 54 comprises a substantially annular coil housing 62, a coil winding 64 wound about the coil housing 62, and a substantially annular armature 72 axially movable in the direction toward and away from the valve seat 58. The armature 52 is coaxial to the coil winding 64 and is radially spaced from the coil housing 62, thus defining an air gap 76. The coil housing 62 is supported by the casing 44 substantially coaxially to the front output shaft 25 through a coil housing bushing 70 for rotation relative to the casing 44. At the same time, the coil housing 62 is non-rotatable relative to casing 44. The coil housing 62 is preferably formed of a single or a plurality of laminations of a magnetically permeable material, such as conventional ferromagnetic materials. The coil housing bushing 70 is made of any appropriate non-magnetic material well known to those skilled in the art.

The annular armature 72 is supported within an armature bushing 74 for axial movement in the direction toward and away from the valve seat 58. The armature bushing 74 is non-rotatably mounted to the casing 44 by any appropriate means, such as press-fitting, adhesive bonding, etc. Preferably, the armature bushing 74 is made of any appropriate non-magnetic material well known to those skilled in the art.

In the exemplary embodiment illustrated in Figs. 5 and 6, the armature 72 is radially disposed outside the coil housing 62 of the electro-magnetic actuator 54. Alternatively, the armature 72 may be disposed within the coil housing 62.

The valve closure member 60 is urged and held in place against the valve seat 58 by an actuator plate 78. In turn, the actuator plate 78 is adapted to engage the armature 72 of the electro-magnetic actuator 54 radially disposed outside the coil housing 62 thereof. Preferably, the actuator plate 78 is in the shape of an annular segment and is made of any appropriate non-magnetic material well known to those skilled in the art. Furthermore, the actuator plate 78 is fastened to the armature 72 by any appropriate means known in the art, such as threaded connectors, adhesive bonding, etc.

When electrical current is supplied to the coil winding 64, a magnetic flux is caused to flow through the armature 72. The magnetic flux creates an axial force that axially displaces the armature 72 relative to the coil housing 62. The armature 72 urges the valve closure member 60 upon the valve seat 58 with a predetermined axial retaining force that is a function of the electrical current supplied to the coil winding 64. It will be appreciated by those skilled in the art that the pressurized hydraulic fluid will not flow through the pressure relief valve 52 until the hydraulic pressure generated by the gerotor pump 46 results in a reaction force larger than the axial retaining force exerted to the armature 72 by the magnetic flux generated by the coil winding 64, thereby pushing the valve closure member 60 out of the valve seat 58. Therefore, such an arrangement creates a relief valve with a release pressure that is a function of the current supplied to the coil winding 64, and provides a predetermined pressure limit in the hydraulic system. Thus, the variable pressure relief valve assembly 50 selectively sets the release pressure of the pressure relief valve 52 as a function of the electrical current supplied to the coil winding 64 and, subsequently, defines the magnitude of the pressure within the piston pressure chamber 48c.

It will be appreciated by those skilled in the art that the armature 72 may have any appropriate shape in the cross-section. Preferably, as illustrated in the exemplary embodiment of Fig. 6, the armature 72 has a generally U-shaped cross-section with magnetic poles facing the coil housing 62, similar to those used in reluctance electric motors. Moreover, the mutual geometric arrangement of the armature 72 and the coil housing 62 is such as to maintain a substantially constant axial force applied upon the valve closure member 60 by the electro-magnetic actuator 54 as it moves from its closed to open position. This is achieved by maintaining a proper "off-set" between the armature 72 and the coil housing 62 (and, consequently, the coil winding 64). The term "off-set" is determined here as an amount of misalignment between the armature 72 and the coil housing 62, or a distance k between an outward face 62' of the coil housing 62 and an outward face 72' of the armature 72, as illustrated in Fig. 6.

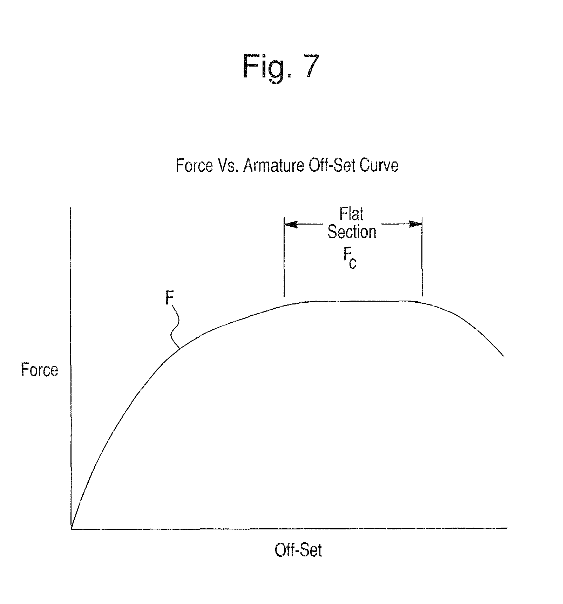

Fig. 7 depicts a graph showing the axial force applied upon the valve closure member 60 by the electro-magnetic actuator 54 as a function of the "off-set" distance k while a constant magnitude of electric current is supplied to the coil winding 64. The graph is in the form of a curved line F having a substantially "flat" section F_{C} wherein the axial force varies insignificantly with respect to the "off-set" distance k. However, operation outside of this section F_{C} results in an abrupt change of the axial force. Thus, while the electro-magnetic actuator 54 of the relief valve assembly 50 is operated in the "flat" section F_{C}, the axial force applied upon the valve closure member 60 by the electro-magnetic actuator 54 is substantially constant as it moves from its closed to open position, and is a function of the electrical current supplied to the coil winding 64. On the other hand, operation outside of this "flat" section F_{C} results in the axial force being a function of both the current and the "off-set" distance k that would make control of the variable pressure relief valve more difficult requiring a closed loop feedback as to the valve's "off-set". Other, more traditional solenoid pole designs do not provide this "flat" section in the axial force versus "off-set" distance curve.

For the above described reason, the electro-magnetic actuator 54 in accordance with the preferred embodiment of the present invention is arranged to provide the "off-set" distance k between the coil housing 62 and the armature 72 within the "flat" section F_{C} of the axial force versus "off-set" distance curve so as to ensure that the axial force applied upon the valve closure member 60 by the electro-magnetic actuator 54 is substantially constant as it moves from its closed to open position, and is a function only of the electrical current supplied to the coil winding 64.

When a maximum current is applied to the coil winding 64 of the solenoid actuator 54, the retaining force of the pressure relief check valve 52 is at its maximum, thus a maximum release pressure is provided by the pressure relief check valve 52. In this configuration, the maximum pressure attainable within the piston pressure chamber 48c is sufficient to fully actuate the friction clutch assembly 42 which results in fully engaging the friction clutch pack of the torque-coupling device 40, and the limited slip feature is in the fully "ON" condition.

The pressure limit of the pressure relief check valve 52, i.e. the release pressure of the pressure relief check valve 52, can be adjusted by controlling the current applied to the coil winding 64 of the electro-magnetic actuator 54.

As the less current is applied to the coil winding 64, the less axial retaining force is exerted to the pressure relief check valve 52, thus the less is the release pressure provided by the pressure relief check valve 52. This results in an adjustment mechanism for lowering the maximum system pressure attainable within the piston pressure chamber 48c.

When a minimum current is applied to the coil winding 64 of the solenoid actuator 54, the retaining force of the pressure relief check valve 52 is at its minimum, thus a minimum release pressure is provided by the pressure relief check valve 52. In this configuration, the limited slip feature is in the fully "OFF" condition in that the maximum pressure which can be obtained in the piston pressure chamber 48c is not high enough to engage the friction clutch assembly 42, thus effectively disabling the clutch assembly 42 and essentially disconnecting the torque-coupling device 40.

In between the "ON" and "OFF" conditions of the torque-coupling device 40, the release pressure of the pressure relief check valve 52 may be set at any value between these limits by modulating the current applied to the coil winding 64 of the solenoid actuator 54. This provides the torque-coupling device 40 with an infinitely variable maximum pressure limit in which the amount of the limited slip available to the torque-coupling device 40 can be limited and optimized to match various vehicle operating conditions. This provides an opportunity to dynamically control the hydraulic pressure for traction enhancement. For example, if the release pressure is set at a low value, a control system can be used to sense wheel speeds or speed differences and allow for increased hydraulic pressure. The increase in pressure available may be a function of the speed difference. This will result in an optimized amount of limited slip between the fully "ON" and "OFF" conditions.

During normal operation, the torque-coupling device 40 is in the "OFF" position as the minimum current is applied to the variable pressure relief valve assembly 50, thus disabling the clutch assembly 42. However, if, for example, the wheels 15 of the primary axle assembly 11 loses traction, the CCM 102 issues a signal to the variable pressure relief valve assembly 50 to set the torque-coupling device 40 in the "ON" position. This will set the maximum release pressure provided by the pressure relief check valve 52. The differential speed between the input shaft 34 and the front output shaft 25 will result in the hydraulic pump 46 delivering pressurized fluid to the piston 48a, and the friction clutch assembly 42 will be engaged. With the clutch assembly 42 engaged, the wheels 30 of the secondary axle assembly 27 of the vehicle will be driven.

Therefore, in accordance with the present invention, the AWD system is actuated only when the vehicle input sensors 104 sense a reduction in traction at the rear wheels 15. Also, the AWD system may by actuated manually by a vehicle operator.

Moreover, when energized, the solenoid-operated valve assembly 50 is capable of modulating a pump discharge pressure in a variable range from a minimum pressure to a maximum pressure, thereby selectively and variably controlling a drive torque applied to the wheels of the auxiliary axle assembly in a range from a minimum torque value to a maximum torque value. Thus, the torque coupling in accordance with the present invention allows infinitely variable torque distribution between the primary axle assembly and the secondary axle assembly.

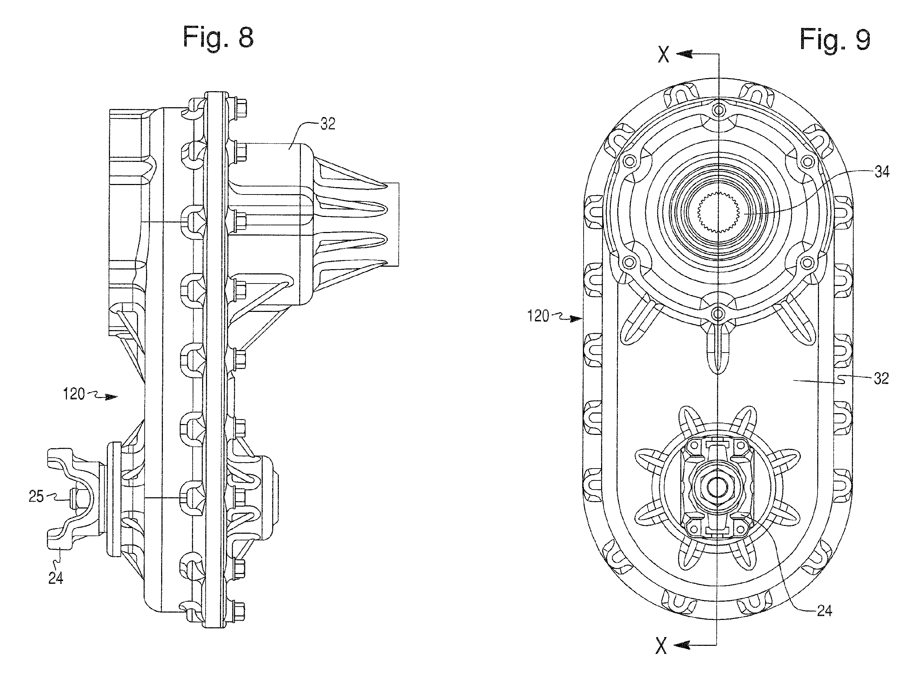

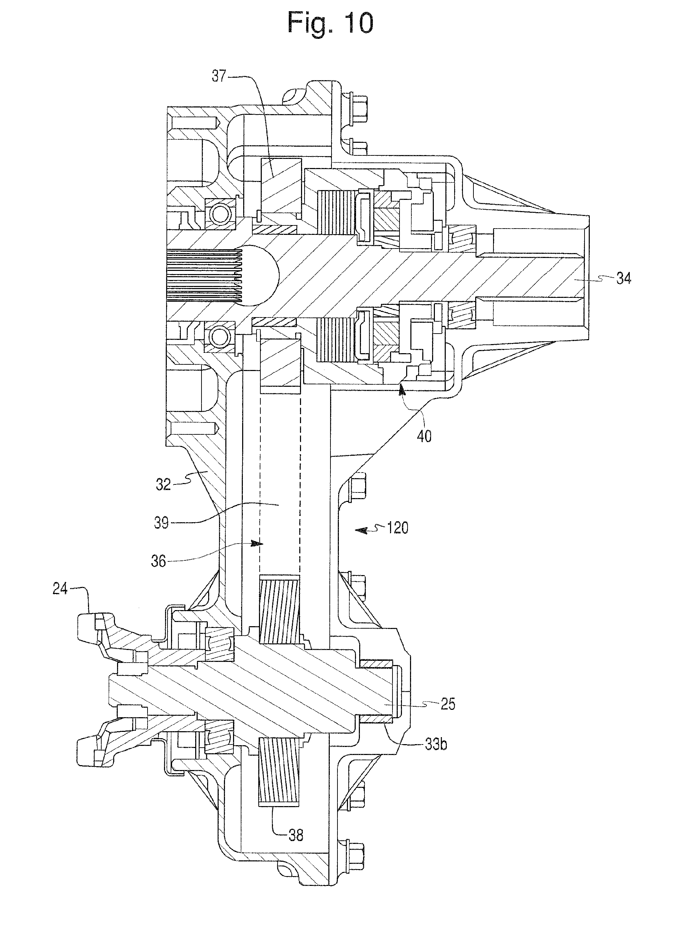

Figs. 8-11 of the drawings depict a second exemplary embodiment of the transfer case of the present invention generally designated with the reference numeral 120. Components, which are unchanged from, or function in the same way as in the first exemplary embodiment depicted in Figs. 1-7 are labeled with the same reference numerals, sometimes without describing detail since similarities between the corresponding parts in the two embodiments will be readily perceived by the reader.

As illustrated in Figs. 8-10, the transfer case 120 of the second exemplary embodiment of the present invention comprises a hollow housing 32 secured to the transmission unit 4, an input shaft 34 drivingly coupled to the output shaft of the transmission unit, a front output shaft 25 drivingly coupled to the secondary axle assembly 27 and selectively drivingly connectable to the input shaft 34. The input shaft 34 and the front output shaft 25 are rotatably supported within the housing 32 by appropriate support means.

Torque transfer from the input shaft 34 to the front output shaft 25 occurs through a drive assembly 36. Preferably, the drive assembly 36 is in the form of a chain drive assembly. The chain drive assembly 36 includes an input sprocket 37 mounted about the input shaft 34, an output sprocket 38 mounted about the front output shaft 25, and an endless element 39 is provided to transmit a drive torque from the input sprocket 37 to the output sprocket 38. The output sprocket 38 is drivingly connected to the front output shaft 25 by any known means, such as through a spline connection.

The input sprocket 37 is mounted about the input shaft 34 through a selectively operable, hydraulically actuated torque-coupling device 40 adapted to operatively and selectively actuate the front, secondary drive axle assembly 27 of the drivetrain of the AWD motor vehicle only when needed, e.g. when slippage of the wheels 15 of the primary axle assembly 11 occurs. Specifically, the torque-coupling device 40 operatively and selectively connects the input shaft 34 and the front output shaft 25. More specifically, the torque-coupling device 40 of the transfer case 120 according to the second exemplary embodiment of the present invention is provided for selectively coupling the input shaft 34 with the input sprocket 37. Preferably, the hydraulically actuated torque-coupling device 40 of the transfer case 120 according to the second exemplary embodiment of the present invention is substantially identical to the torque-coupling device of the transfer case 20 according to the first exemplary embodiment of the present invention.

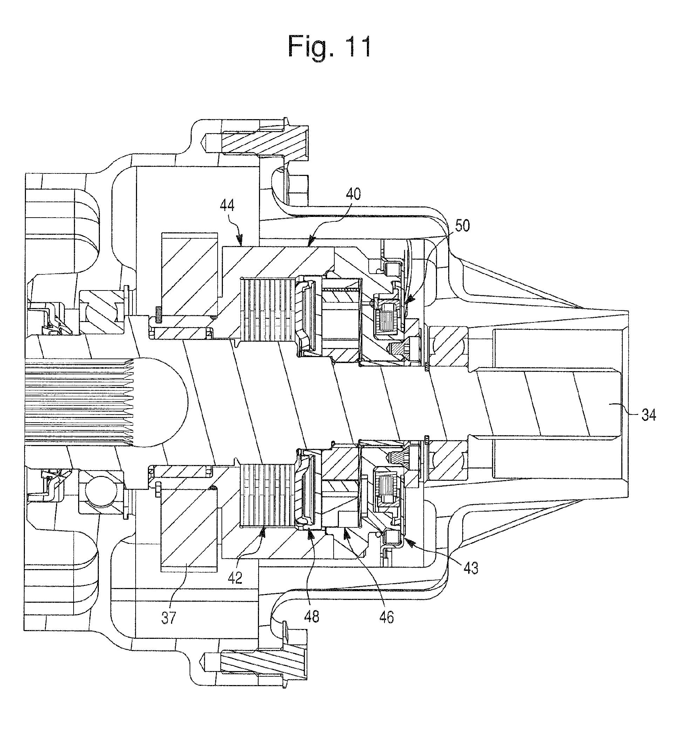

As further illustrated in Fig. 11, the torque-coupling device 40 comprises a friction clutch assembly 42 and a hydraulic clutch actuator 43 for selectively frictionally loading (actuating) the friction clutch assembly 42. The friction clutch assembly 42 is provided for engaging and disengaging the input sprocket 37 to/from the front output shaft 25. The hydraulically actuated friction clutch assembly 42 and the hydraulic clutch actuator 43 are disposed within a casing 44 rotatably mounted within the housing 32 and drivingly coupled to the input sprocket 37.

The hydraulic clutch actuator 43 selectively actuates the clutch assembly 42. Preferably, the hydraulic clutch actuator 43 includes a speed sensitive positive displacement hydraulic pump 46 providing a pressurized hydraulic fluid, a piston assembly 48 for axially loading the friction clutch assembly 42, and a variable pressure relief valve assembly 50 for selectively controlling a discharge pressure of the pump 46 and, subsequently, the friction clutch assembly 42. Preferably, the friction clutch assembly 42 and the hydraulic clutch actuator 43 of the second exemplary embodiment of the present invention are unchanged from and function generally in the same way as in the first exemplary embodiment depicted in Figs. 5-7.

Therefore, the selectively operable transfer case for the AWD motor vehicles in accordance with the present invention represents a novel arrangement of the hydraulically actuated AWD transfer case provided with a variable pressure relief valve assembly for allowing selective actuation of the auxiliary drive axle assembly and infinitely variable torque distribution between the primary and secondary drive axle assemblies of the AWD motor vehicle.

The foregoing description of the preferred embodiments of the present invention has been presented for the purpose of illustration in accordance with the provisions of the Patent Statutes. It is not intended to be exhaustive or to limit the invention to the precise forms disclosed. Obvious modifications or variations are possible in light of the above teachings. The embodiments disclosed hereinabove were chosen in order to best illustrate the principles of the present invention and its practical application to thereby enable those of ordinary skill in the art to best utilize the invention in various embodiments and with various modifications as are suited to the particular use contemplated, as long as the principles described herein are followed. Thus, changes can be made in the above-described invention without departing from the intent and scope thereof. It is also intended that the scope of the present invention be defined by the claims appended thereto.

## Claims

1. A transfer case for a motor vehicle having a selectively, on-demand actuatable secondary drive axle, said transfer case comprising:
an input shaft and an input member mounted about said input shaft;
an output shaft spaced from said input shaft and an output member mounted about said output shaft, said output shaft drivingly connected to said secondary drive axle;
a mechanism for transmitting torque from said input member to said output member; and
a torque-coupling device for selectively drivingly connecting one of said input shaft to said input member and said output member to said output shaft, said torque coupling device comprising:
a hollow casing;
a friction clutch assembly comprising at least one first member coupled to rotate with one of said input member and said output member and at least one second member coupled to rotate with one of said input shaft and said output shaft, said first and second members being frictionally engageable with one another; and
a hydraulic clutch actuator for selectively frictionally loading said friction clutch assembly, said hydraulic clutch actuator comprising:
a hydraulic pump disposed within said hollow casing to generate a hydraulic pressure to frictionally load said friction clutch assembly; and
a variable pressure relief valve assembly fluidly communicating with said hydraulic pump to selectively control said hydraulic pressure.

2. The transfer case as defined in claim 1, wherein said variable pressure relief valve assembly includes a valve closure member, a valve seat complementary to said valve closure member and an electro-magnetic actuator for engaging said valve closure member and urging thereof against said valve seat so as to selectively vary a release pressure of said pressure relief valve assembly based on a magnitude of an electric current supplied to said electro-magnetic actuator, said valve closure member is movable between a closed position when said valve closure member engages said valve seat and an open position when said valve closure member is axially spaced from said valve seat.

3. The transfer case as defined in claim 2, wherein said electro-magnetic actuator including a coil winding wound about a coil housing mounted to said clutch casing and an armature radially spaced from said coil housing and axially movable relative thereto in response to a magnetic flux generated by said coil winding when said electrical current is supplied thereto, said armature engages said valve closure member and urges thereof against said valve seat with an axial force determined by said magnitude of said electric current for selectively setting up said release pressure of said valve closure member.

4. The transfer case as defined in claim 3, wherein said coil housing is rotatably mounted to an outer peripheral surface of said clutch casing coaxially to an axis of rotation of said casing, and wherein said armature is non-rotatably coupled to said clutch casing, disposed outside said coil housing of said electro-magnetic actuator, substantially annular in shape, and mounted substantially coaxially to said coil housing.

5. The transfer case as defined in claim 1, wherein each of said input and members is in the form of a sprocket, and wherein said mechanism for transmitting torque from said input member to said output member is in the form of an endless element transmitting torque from said input sprocket to said output sprocket, and wherein said friction clutch assembly is a friction clutch pack including a plurality of inner friction plates coupled to rotate with said input shaft and a plurality of outer friction plate coupled to rotate with said casing, said casing is drivingly coupled to said output shaft, said friction plates being frictionally engageable with one another, and wherein said casing is formed integrally with said output shaft, and wherein said casing houses said friction clutch assembly and said a hydraulic clutch actuator.

6. The transfer case as defined in claim 1, wherein said hydraulic pump is a positive displacement hydraulic pump disposed within said casing, said hydraulic pump generates a hydraulic pressure in response to relative rotation between said casing and at least one of said output shafts, and wherein said pump is a bi-directional gerotor pump.

7. The transfer case as defined in claim 1, wherein said variable pressure relief valve assembly is adapted to selectively set a maximum hydraulic pressure generated by said hydraulic pump between a maximum release pressure that enables complete actuation of said friction clutch assembly and a minimum release pressure that prevents actuation of said friction clutch assembly, wherein said maximum hydraulic pressure generated by said hydraulic pump is adjustable between said minimum release pressure and said maximum release pressure so as to enable partial actuation of said friction clutch assembly.

8. The transfer case as defined in claim 1, wherein said hydraulic clutch actuator further including a piston assembly disposed within said clutch casing between said pump and said clutch assembly and defining a pressure chamber, wherein said variable pressure relief valve assembly selectively controls a maximum hydraulic pressure attainable within said pressure chamber, wherein said variable pressure relief valve assembly selectively controls said maximum pressure attainable within said pressure chamber between a maximum release pressure and a minimum release pressure, and wherein said minimum release pressure is at a level that prevents actuation of said friction clutch assembly, and wherein said maximum release pressure is at a level that enables complete actuation of said friction clutch assembly, and wherein said maximum hydraulic pressure attainable within said pressure chamber is adjustable between said minimum release pressure and said maximum release pressure so as to enable partial actuation of said friction clutch assembly.

9. The transfer case as defined in claim 3, wherein said armature has a substantially U-shaped cross-section, wherein said coil housing is rotatably mounted to said casing, and wherein said armature is off-set from said coil housing to a distance that ensures that said axial force applied upon said valve closure member by said electro-magnetic actuator is substantially constant as said valve closure member moves from said closed position to said open position and said axial force is a function only of said electrical current supplied to said coil winding.

10. The transfer case as defined in claim 1, wherein said variable pressure relief valve assembly selective controls said hydraulic pressure generated by hydraulic pump in response to at least one vehicle parameter selected from the group consisting of a vehicle speed, a wheel speed difference, a vehicle yaw rate, a steering angle, an engine throttle position, a vehicle lateral acceleration, a brake application, an ice detection, a moisture detection, a driveline configuration, an anti-lock brake system/traction control system actuation, and a vehicle yaw stability control system actuation.

11. The transfer case as defined in claim 1, wherein said housing is fastened to one of an axle housing of said secondary drive axle assembly or a housing of a power transfer unit of said all-wheel-drive motor vehicle, and wherein said input shaft is drivingly coupled to a propeller shaft of said motor vehicle and said output shaft is a drive pinion shaft of said secondary drive axle assembly.

12. The transfer case as defined in claim 2, wherein said valve seat is provided on said clutch casing.
